# EUROPÄISCHE PATENTANMELDUNG

(11) **EP 2 439 178 A1**
(43) Veröffentlichungstag der Anmeldung: **11.04.2012**
(21) Anmeldenummer: 11183095.6
(22) Anmeldetag: 28.09.2011
(51) Int. Cl.: C02F 1/46, C02F 11/00, C02F 101/20

(54) **Verfahren zur Aufbereitung von Schlämmen**

(30) Priorität: 29.09.2010 DE 102010041582
(71) Anmelder: SIEMENS AKTIENGESELLSCHAFT, 80333 München (DE)
(72) Erfinder: Hahn, Alexander, 91341 Röttenbach (DE); Schwarz, Hermann, 97084 Würzburg (DE); Straub, Jochen, 91054 Erlangen (DE); Waidhas, Manfred, 90427 Nürnberg (DE)

(57) **Zusammenfassung**

Die Erfindung betrifft ein Verfahren zur Aufbereitung von Schlämmen (1), wobei mindestens zwei Elektroden (2) vorgesehen sind, durch die ein elektrisches Feld erzeugt wird. Die Erfindung zeichnet sich dadurch aus, dass Wasser, das in dem Bioschlamm vorhanden ist, elektrolysiert wird und zumindest teilweise OH°-Radikale (OH°) erzeugt werden.

## Beschreibung

Die Erfindung betrifft ein Verfahren zur Aufbereitung von Schlämmen nach Patentanspruch 1.

Die Verwertung der in kommunalen und industriellen Kläranlagen anfallenden Schlämme, insbesondere Bioschlämme, erfolgt heute nahezu ausschließlich thermisch. Die Aufbereitung als Düngermaterial aufgrund der immer strenger werdenden Gesetzgebung ist stark rückläufig. Weiterhin ist eine Deponierung der anfallenden Schlämme mit steigenden Deponiekosten verbunden. Darüber hinaus darf ein Bioschlamm, der für eine Deponierung vorgesehen ist, keine aktiven Mikroorganismen aufweisen, so dass in diesem Fall ein zusätzlicher Desinfektionsschritt notwendig wird.

Aus diesen Gründen gewinnt die thermische Verwertung von Bioschlämmen am Produktionsort oder in zentralen Verwertungsanlagen immer mehr an Bedeutung. Deshalb ist die Entwässerung der Schlämme ein besonders wichtiger Verfahrensschritt im Verwertungsprozess. Durch Steigerung des Entwässerungsgrades der Schlämme lässt sich zum einen der Brennwert erhöhen, zum anderen führt eine verbesserte Entwässerung zu einer Volumen-und Gewichtsreduzierung. Das spielt beim Transport der Schlämme zu einer zentralen Verwertungsanlage eine entscheidende Rolle.

Die Entwässerung der anfallenden Bioschlämme erfolgt mechanisch bzw. mechanisch-thermisch. Zum Stand der Technik zur Entwässerung von Bioschlämmen und verschiedenen Verfahren, um die Entwässerung der Schlämme zu erhöhen, können auszugsweise folgende Schriften genannt werden. Dabei handelt es sich um die DE 10 2007 056 170 A1, die EP 0 074 776 A2, die DE 3 635 268 A1 und die DE 9 312 198 U1.

Grundsätzlich ist bekannt, dass durch die Verwendung starker Oxidationsmittel die Entwässerung der Schlämme gesteigert werden kann. Die Oxidation führt dazu, dass im Bioschlamm die Zellwände angegriffen werden und das eingeschlossene Wasser austreten kann. Darin liegt die verbesserte Entwässerung der Schlämme begründet. Beispielsweise in der DE 69 810 722 T2 wird ein Verfahren beschrieben, wie durch in den Klärschlamm eingeleitetes Ozon-Gas dieser entwässert werden kann.

Keines der genannten Verfahren des Standes der Technik beschreibt jedoch ein Verfahren, das auf der einen Seite zur Entwässerung des Bioschlammes führt, diesen gleichzeitig desinfiziert und parallel dazu noch geeignet ist, möglicherweise enthaltene Schwermetalle aus dem Bioschlamm abzuscheiden.

Die Aufgabe der Erfindung besteht demnach darin, ein Verfahren bereitzustellen, das gleichzeitig eine Entwässerung eines Bioschlammes, dessen Desinfektion und gleichzeitige Abscheidung von möglicherweise darin enthaltenen Schwermetalle teilweise gewährleisten.

Die Lösung der Aufgabe besteht in einem Verfahren zur Aufbereitung von Schlämmen nach dem Patentanspruch 1.

Das erfindungsgemäße Verfahren zur Aufbereitung von Schlämmen nach Patentanspruch 1 zeichnet sich dadurch aus, dass mindestens zwei Elektroden vorgesehen sind, durch die ein elektrisches Feld erzeugt wird. Das elektrische Feld ist derart ausgebildet, dass Wasser, das in dem Schlamm vorhanden ist, elektrolysiert wird und dabei OH°-Radikale erzeugt werden.

Unter Schlämmen versteht man hierbei wässrige Lösungen mit Feststoffanteilen, die insbesondere organische und insbesondere biologische Feststoffanteile enthalten. Derartige Schlämme können aus kommunalen Kläranlagen oder aus industriellen Kläranlagen stammen. Es werden unter dem Begriff "Schlämmen" insbesondere auch so genannte Bioschlämme verstanden.

Durch das erfindungsgemäße Verfahren ist es möglich, durch die elektrochemische Behandlung der Schlämme einerseits das Entwässerungsverhalten mit einer Desinfektion der Schlämme und der Möglichkeit, eventuell vorhandene Schwermetalle zu entfernen, zu kombinieren. Insbesondere bei industriellen Klärschlämmen ist es von besonderer Bedeutung, gerade Schwermetalle aus dem Schlamm zu befreien.

Bei der elektrochemischen Behandlung der Klärschlämme wird das in den Schlämmen vorhandene Wasser elektrolysiert. Dabei entstehen hochreaktive OH°-Radikale. Diese führen als starkes Oxidationsmittel zum verbesserten Entwässerungsverhalten der Schlämme. Die desinfizierende Wirkung der elektrochemischen Behandlung ist ebenfalls auf die OH°-Radikale, gepaart mit entstehendem Chlorgas, zurückzuführen. Im Schlamm enthaltene Schwermetalle wandern aufgrund des elektrischen Feldes zur Kathode und werden dort reduktiv abgeschieden.

Dabei ist es besonders zweckmäßig, wenn der Schlamm das elektrische Feld durchfließt. Beim Durchfließen kann dieser eine lineare Bewegung einnehmen, es kann aber auch eine rotierende Bewegung in einem kreisförmigen Becken zweckmäßig sein.

Aufgrund der hohen Reaktivität der OH°-Radikalen haben diese in der Nähe der Elektrode, an der sie entstehen, ein sehr begrenztes Wirkfeld. Daher ist es zweckmäßig, mehrere Elektroden in abwechselnder Polarisierung entlang einer Fließrichtung des Schlammes hintereinander anzuordnen.

Die Ausgestaltung der Elektroden in einem Fließbereich des Schlammes kann dabei verschiedene Formen annehmen. Sie wird allgemein als netzförmig beschrieben, darunter fällt unter anderem eine Rechenform, eine Kammform, Roste bzw. Gitter oder andere Netze, wobei der Querschnitt der Elektroden unterschiedliche, insbesondere die Strömung des Bioschlamms beeinflussende Querschnitte annehmen kann.

In einer anderen Ausgestaltungsform der Erfindung sind die Elektroden entlang der Fließrichtung des Schlammes konzentrisch zueinander angeordnet. Dies kann beispielsweise in Form von konzentrischen Rohren geschehen.

Es hat sich ferner als zweckmäßig herausgestellt, den Schlamm vor dem Kontakt mit dem elektrischen Feld mit Gas aufzuschäumen. Dieses Aufschäumen erfolgt insbesondere während eines Rührvorganges. Zum Aufschäumen kann insbesondere Luft oder Sauerstoff verwendet werden. Hierbei wird die Viskosität des Schlammes in vorteilhafter Weise erhöht, so dass die Fließeigenschaften des Schlammes im Bereich der Elektroden verbessert werden.

Grundsätzlich ist es zweckmäßig, ein statisches elektrisches Feld anzulegen. Es kann jedoch auch von Vorteil sein, insbesondere zur Einsparung von Energie ein gepulstes elektrisches Feld anzulegen. Das gepulste elektrische Feld kann mit kurzen Pulsphasen stärker sein als ein kontinuierlich angelegtes Feld.

Weitere vorteilhafte Ausgestaltungsformen der Erfindung und weiterer Merkmale ergeben sich aus den folgenden Zeichnungen. Dabei sind Merkmale mit derselben Bezeichnung und unterschiedlicher Ausgestaltungsform mit denselben Bezugszeichen versehen.

Dabei zeigen:
- Figur 1: eine schematische Darstellung der elektrochemischen Behandlung von Schlämmen, insbesondere Bioschlämmen,
- Figur 2: die Anordnung von Elektroden in abwechselnder Polarisierung in Form von Rechen,
- Figur 3: die Anordnung von Elektroden in Fließrichtung des Schlammes in Form von Querstreben,
- Figur 4: die Anordnung von Elektroden in Form von Gittern,
- Figur 5: die Anordnung von Elektroden in Form von konzentrischen Rohren und
- Figur 6: die Anordnung von Elektroden in Form von mehreren ineinander angeordneten konzentrischen Rohren mit abwechselnder Polarisierung.

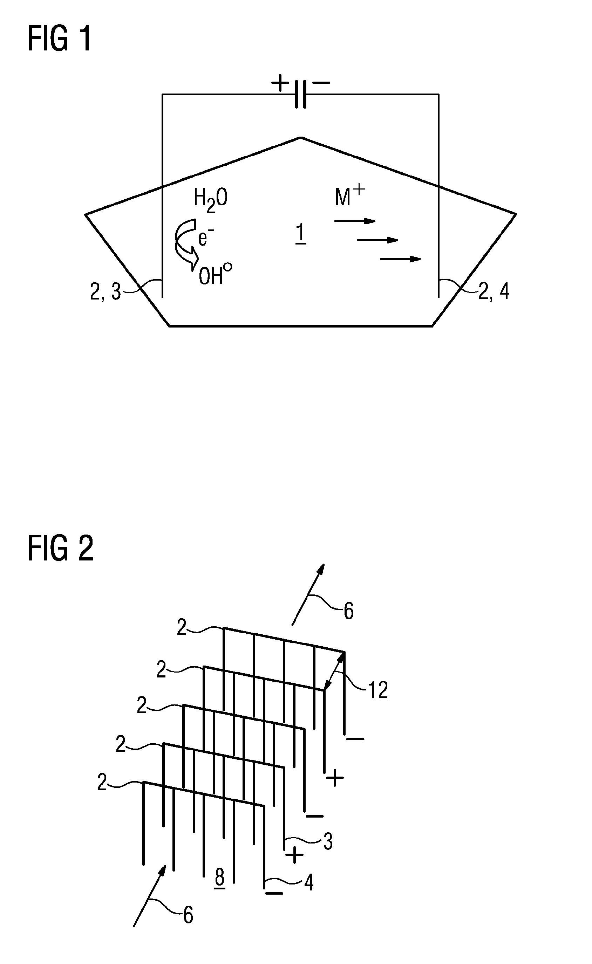

In Figur 1 ist eine schematische Darstellung des Verfahrens zur Entwässerung und Desinfektion von Bioschlämmen gegeben. Hierbei wird ein Schlamm 1, insbesondere ein Bioschlamm, einem elektrischen Feld ausgesetzt. Das elektrische Feld wird durch zwei Elektroden 2 erzeugt, wobei hiervon eine positiv geladene Anode 3 ist eine andere Elektrode 2 in Form einer negativ geladenen Kathode 4 ausgestaltet ist. Bei Anlegen des elektrischen Feldes wird dieses zwischen der Anode 3 und der Kathode 4 erzeugt. Im elektrischen Feld zwischen der Anode 3 und der Kathode 4 wird hierbei das im Schlamm enthaltene Wasser (H₂O) elektrolysiert, wobei OH°-Radikale entstehen. Als starkes Oxidationsmittel tragen die OH°-Radikale zum verbesserten Entwässerungsverhalten der Schlämme bei, da durch sie die Zellwände der biologischen Komponenten der Schlämme angegriffen werden und das darin enthaltene eingeschlossene Wasser austreten kann.

Ferner können Schwermetalle (M⁺), die möglicherweise in den Schlämmen vorhanden sind, zur Kathode 4 wandern. Dort werden die metallischen Ionen (M⁺) zu elementarem Metall reduziert und abgeschieden. Ferner werden durch die OH°-Radikale aktive Mikroorganismen im Schlamm 1 abgetötet.

Durch dieses beschriebene Verfahren ist es daher möglich, einerseits einen Schlamm gründlicher zu entwässern, was die thermische Verwertung verbessert, da dadurch der Brennwert des Schlammes erhöht wird. Ferner werden Mikroorganismen abgetötet, was gleichzeitig eine Voraussetzung für eine Deponierung des Schlammes darstellt. Der so behandelte Schlamm kann also einerseits thermisch verwertet oder andererseits je nach Anforderung deponiert werden. Dies kann auch deshalb erfolgen, weil gleichzeitig Schwermetalle aus dem Schlamm entfernt wurden.

In den Figuren 2 bis 6 sind verschiedene zweckmäßige Anordnungen der Elektroden 2 gegeben. Aufgrund der hohen Reaktivität der OH°-Radikale wirken diese nur in verhältnismäßig geringem Umfeld der Elektroden 2. Weiterhin ist es zweckmäßig, die Elektroden 2, also die Anode 3 und die Kathode 4, nicht weiter als 3000 cm²/**ρ** (**Ω** cm) voneinander zu entfernen, damit die Betriebsspannung und die somit aufzubringende elektrische Leistung nicht zu hoch wird. Bei einem spezifischen Widerstand des zu behandelnden Mediums von 100 **Ω** cm bedeutet dies einen zweckmäßigen Elektrodenabstand von 30 cm. Aus diesem Grund werden alternierend hintereinander in abwechselnder Polarisierung Anode 3 und Kathode 4 in Form von Gittern oder Netzen aufgespannt. Hierunter werden insbesondere rechenförmige Ausgestaltungen der Elektroden 2 verstanden, wie sie in Figur 2 dargestellt sind. Entlang einer Fließrichtung 6 des Schlammes 1 im Fließbereich 8 sind diese rechenförmigen Elektroden 2 aufgestellt, wobei die Polarisierung der Elektroden 2 in Kathode 3 und Anode 4 abwechselt.

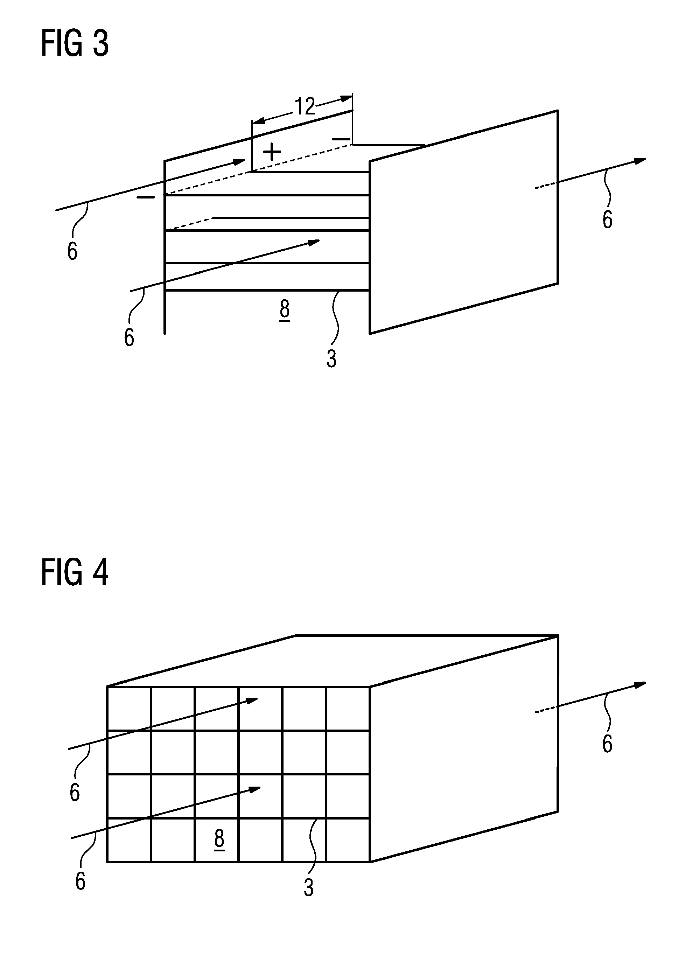

Entsprechend der Figur 2 ist in Figur 3 eine alternative Ausgestaltung einer netzförmigen Elektrodenpaarung 2 gegeben, hier sind Querstreben quer zur Fließrichtung 6 hintereinander und übereinander angeordnet.

Ebenso wie in Figur 3 ist auch in Figur 4 eine weitere Ausgestaltungsform einer netzförmigen Elektrodenanordnung gegeben. Auch hier sind Kathode 4 und Anode 3 hintereinander in die Fließrichtung 6 alternierend angeordnet. Das Netz ist hier in Form eines rechtwinkligen Gitters ausgestaltet.

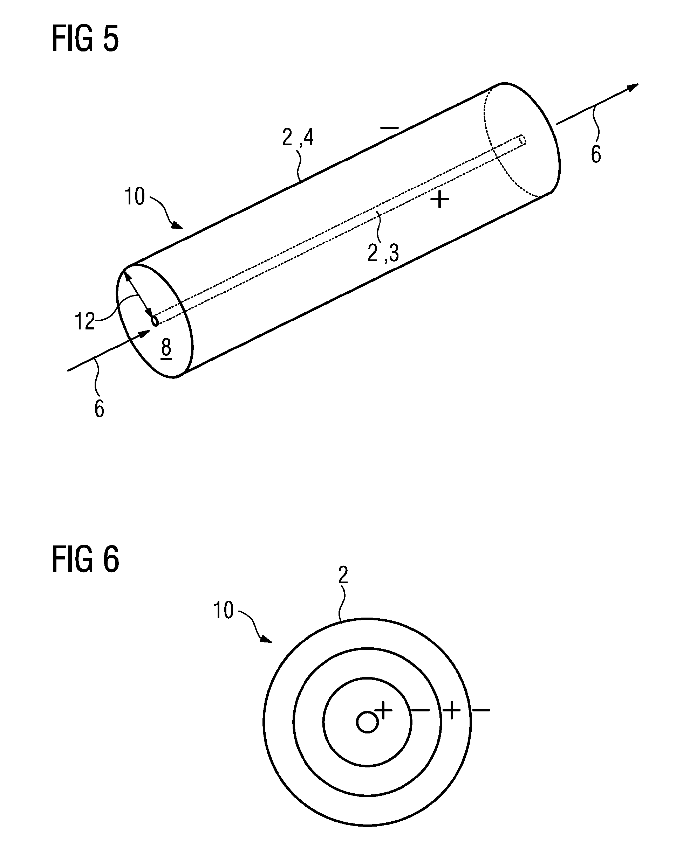

Für alle Ausgestaltungsformen der Elektroden 2 nach den Figuren 2 bis 4 gilt, dass der Querschnitt der Elektroden 2 entsprechend der elektrischen Feldverteilung und des Fließverhaltens des Schlammes 1 angepasst ist. So ist sowohl ein runder Querschnitt wie auch ein keilförmiger oder ein rechteckiger Querschnitt zweckmäßig. Alternativ zu den netzförmigen Ausgestaltungen der Elektroden, wie sie in den Figuren 2 bis 4 dargestellt sind, ist in den Figuren 5 und 6 eine konzentrische Elektrodenanordnung beschrieben. Hierbei handelt es sich um rohrförmige Elektroden 2, die konzentrisch ineinander angeordnet sind. Hierbei ist beispielsweise ein inneres Rohr (oder auch ein geschlossener Stab) in Form einer positiv geladenen Anode 3 ausgestaltet, das in einem größeren Rohr, das in Form einer Kathode 4 ausgestaltet ist, konzentrisch angeordnet ist. Es kann auch zweckmäßig sein, wie es in Figur 6 querschnittsförmig dargestellt ist, mehrere konzentrische Rohre als Elektroden 2 ineinander mit alternierender Polarisierung aufzubauen.

Ferner hat es sich als zweckmäßig herausgestellt, den Schlamm 1 zur Verbesserung dessen Fließverhaltens und zur Erhöhung seiner Viskosität in einem Rührbegasungsvorgang mit Gas, insbesondere Luft oder Sauerstoff, aufzuschäumen. Dies führt aufgrund des verbesserten Fließverhaltens des Schlammes 1 zu einer einfacheren Prozessführung und zu einer weniger mechanischen Belastung der Fördervorrichtungen.

Das angewandte elektrische Feld kann ein kontinuierliches elektrisches Feld sein. Grundsätzlich hat es sich jedoch als zweckmäßig herausgestellt, ein gepulstes elektrisches Feld anzulegen, da hierbei bei kürzeren Pulsdauern höhere elektrische Felder erzeugt werden können.

Als Anodenmaterial hat sich insbesondere beschichtetes Titan oder Niob als vorteilhaft herausgestellt. Als Beschichtung für Titan und Niob dient insbesondere Platin bzw. Iridiumoxid oder Rutheniumoxid. Ferner können Bor dotierte Diamantbeschichtungen zweckmäßig sein. Edelstähle können ebenfalls angewandt werden, wenn sie einen Chromgehalt von mehr als 20 % und einen Nickelgehalt von ebenfalls mehr als 20 % aufweisen. Für die Kathode hat sich Baustahl, Edelstahl bzw. Kohlenstoff in Graphitform als zweckmäßig erwiesen.

## Patentansprüche

1. Verfahren zur Aufbereitung von Schlämmen, wobei mindestens zwei Elektroden (2) vorgesehen sind, durch die ein elektrisches Feld erzeugt wird, wobei das elektrische Feld in der Art ausgestattet ist, dass Wasser, das in dem Schlamm vorhanden ist, elektrolysiert wird und OH°-Radikale erzeugt werden.

2. Verfahren nach Anspruch 1, **dadurch gekennzeichnet, dass** das elektrische Feld vom Schlamm durchflossen wird.

3. Verfahren nach Anspruch 1 oder 2, **dadurch gekennzeichnet, dass** im Schlamm enthaltene Schwermetalle (M⁺) an der negativ geladenen Elektrode (4) reduktiv abgeschieden werden.

4. Verfahren nach einem der vorhergehenden Ansprüche, **dadurch gekennzeichnet, dass** mehrere Elektroden (2) mit abwechselnder Polarisierung entlang einer Fließrichtung (6) des Schlammes hintereinander angeordnet sind.

5. Verfahren nach Anspruch 4, **dadurch gekennzeichnet, dass** die hintereinander angeordneten Elektroden (2) einen Fließbereich (8) des Schlamms netzförmig durchdringen.

6. Verfahren nach einem der Ansprüche 1 bis 3, **dadurch gekennzeichnet, dass** die Elektroden (2) entlang der Fließrichtung (6) des Schlammes konzentrisch zueinander angeordnet sind.

7. Verfahren nach Anspruch 6, **dadurch gekennzeichnet, dass** die Elektroden (2) als konzentrische Rohre (10) angeordnet sind.

8. Verfahren nach einem der vorhergehenden Ansprüche, **dadurch gekennzeichnet, dass** ein Abstand (12) zwischen zwei unterschiedlich gepolten Elektroden geringer als 30 cm ist.

9. Verfahren nach einem der vorhergehenden Ansprüche, **dadurch gekennzeichnet, dass** der Schlamm vor dem Kontakt mit dem elektrischen Feld mit Gas aufgeschäumt wird.

10. Verfahren nach einem der vorhergehenden Ansprüche, **dadurch gekennzeichnet, dass** es sich bei dem elektrischen Feld um ein gepulstes Feld handelt.
